# EUROPÄISCHE PATENTSCHRIFT

(11) **EP 3 754 117 B1**
(45) Veröffentlichungstag und Bekanntmachung des Hinweises auf die Patenterteilung: **06.12.2023**
(21) Anmeldenummer: 20180134.7
(22) Anmeldetag: 16.06.2020
(51) Int. Cl.: E02F 3/30

(54) **BAGGERSTIEL**
EXCAVATOR BOOM
FLÈCHE DE PELLE

(30) Priorität: 17.06.2019 DE 102019116394
(43) Veröffentlichungstag der Anmeldung: 23.12.2020
(73) Patentinhaber: Liebherr-France SAS, 68005 Colmar Cedex (FR)
(72) Erfinder: Hannetel, Jules, 68000 Colmar (FR); Grimaud, Jérémie, 68180 Horbourg-Wihr (FR); Elbel, Guillaume, 68000 Colmar (FR)
(74) Vertreter: Laufhütte, Dieter

(56) Entgegenhaltungen:
- CN-U- 202 324 021
- CN-U- 204 163 127
- GB-A- 2 336 829

## Beschreibung

Die Erfindung betrifft einen Baggerstiel für einen Bagger als Verbindungsglied zwischen Baggerausleger und Anbauwerkzeug, wobei der Baggerstiel im Wesentlichen durch eine kastenartige Blechkonstruktion gebildet ist.

Ein gattungsgemäßer Baggerstiel stellt das Verbindungsglied zwischen Anbauwerkzeug, wie beispielsweise einem Tieflöffel, und dem Ausleger der Baumaschine dar. Der Ausleger kann als Monoblock gefertigt sein. Die Kastenstruktur benötigt für die Anbindung am Baggerausleger und die Montage des Anbauwerkzeuges geeignete Lagerstellen. Die Lagerstellen zur Befestigung des Baggerstiels am Maschinenausleger waren bislang unmittelbar in die Blechkastenkonstruktion eingearbeitet, wodurch der Herstellungsaufwand für den Baggerstiel ungleich komplizierter wird. Ein Beispiel aus dem Stand der Technik ist in CN204163127U offenbart.

Wünschenswert ist jedoch eine möglichst kostengünstige Fertigung solcher Baggerstiele. Zudem besteht als Sekundärziel der Wunsch nach einer Gewichtseinsparung.

Gelöst wird diese Aufgabe durch einen Baggerstiel gemäß den Merkmalen des Anspruchs 1. Vorteilhafte Ausgestaltungen des Baggerstiels sind Gegenstand der abhängigen Ansprüche.

Erfindungsgemäß wird vorgeschlagen, dass die wenigstens eine Lagerstelle für die Verbindung des Baggerstiels mit dem Baggerausleger nicht mehr unmittelbar in die kastenartige Blechkonstruktion eingearbeitet ist, sondern statt dessen wenigstens ein Lagerblech von außen auf die kastenartige Blechkonstruktion aufgebracht ist Dieses externe Lagerblech bildet sodann wenigstens eine Lagerstelle für die schwenkbare Montage des Baggerstiels am Baggerausleger.

Erfindungsgemäß sind zwei symmetrische, parallel zueinander augerichtete Lagerbleche vorgesehen. Die Lagerbleche können Lagerverstärkungen aufweisen. Die Lagerverstärkungen können als Gussteile oder Bleche ausgeführt sein.

Dabei können zwei, parallel zueinander ausgerichteten Lagerbleche vorzugsweise senkrecht auf ein vorzugsweise gebogenes Abschlussblech der Blechkonstruktion des Baggerstiels aufgebracht sein. Ein solch geeignetes, vorzugsweise gebogenes Abschlussblech ist stirnseitig am Baggerstiel bzw. der Blechkastenkonstruktion vorgesehen, d.h. an demjenigen Ende, das zur Montage am Baggerausleger dient. Zwischen den beiden parallel zueinander ausgerichteten Lagerblechen ist erfindungsgemäß wenigstens ein Gussteil eingebracht, das die entsprechende Lagerfunktion übernimmt. Bspw. ist das Gussteil hülsenartig ausgebildet und zur Aufnahme eines entsprechenden Verbindungsmittels, wie bspw. einem Lagerbolzen geeignet. Die Verbindung zwischen Gussteil und Lagerblechen erfolgt beispielsweise mittels einer Kehlnaht-Schweißverbindung oder aber über eine Verklebung.

Eine solche Konstruktion kann nicht nur kostengünstiger gefertigt werden, sondern weist auch hinsichtlich der Stabilität und möglichen Kraftübertragung zwischen Baggerstiel und Baggerausleger Vorteile auf. Bislang wurde bei bestehenden Lösungen das Lager unmittelbar im Kasten untergebracht und dort mittels einer Stumpfstoßnaht mit der Blechkonstruktion verschweißt. Da solche Stumpfstoßnähte nicht nur schwieriger zu fertigen und zudem einen zeitaufwändigeren Schweißvorgang bedeuten, ergeben sich durch die erfindungsgemäße Konstruktion und Verwendungsmöglichkeit des Kehlnahtschweißens weitreichende Vorteile hinsichtlich der Fertigungszeit als auch der resultierenden Stabilität und Qualitätsanforderungen.

Gemäß einer vorteilhaften Ausgestaltungsform des Baggerstiels sind die beiden Lagerbleche identisch ausgestaltet. Theoretisch spricht jedoch nichts gegen eine abweichende Formgebung, um bspw. einer speziellen Einbausituation Rechnung zu tragen.

Erfindungsgemäß sind die Lagerbleche auf einem vorzugsweise gebogenen Abschlussblech der Kastenkonstruktion des Baggerstiels aufgebracht. Die Anbringung der Lagerbleche ist jedoch nicht auf dieses Abschlussblech beschränkt. So kann sich zumindest eines der Lagerbleche auf weitere Flächenabschnitte des Baggerstiels erstrecken. Vorstellbar ist es beispielsweise, dass sich die Lagerbleche bis auf Abschnitte des Ober- oder Untergurtes des Baggerstiels erstrecken, die sich an das Anschlussblech anschliessen. Bevorzugt enden die Lagerbleche auf einem im Wesentlichen planaren Flächenabschnitt des Obergurts der Kastenkonstruktion. Möglich ist es hierbei, dass die Lagerbleche das auslegerseitige Ende des Kastenkonstrukts umschließen, d.h. von der Unterseite des Baggerstiels um das Ende bis zum Obergurt verlaufen.

Ferner kann es von Vorteil sein, wenn die auf dem Obergurt endenden Abschnitte der Lagerbleche einen zur Seitenkante des Baggerstiels gerichteten gekrümmten Verlauf zeigen. Besonders vorteilhaft ist es, wenn das den Obergurt bildende Blech abschnittsweise einen seitlichen Überstand über die senkrecht am Obergurt stehenden Seitenbleche des Kastenkonstrukts aufweist, d.h. ein Längsabschnitt des Obergurtes mit verbreitertem Obergurtblech vorhanden ist. In diesem Fall können die nach außen gekrümmten Enden der Lagerbleche erst auf dieser seitlichen Verlängerung des Obergurtbleches enden, was eine verbesserte Krafteinleitung und stabilere Anbindung der Lagerbleche ermöglicht.

Während die Seitenflächen des Auslegerlagers bzw. Gussteils durch die anliegenden Lagerbleche geschützt sind, liegt die Ober- und/oder Unterseite der Lagerstelle bzw. des Gussteils gegebenenfalls frei. Aus diesem Grund kann die Anbringung wenigstens eines zusätzlichen Abdeckbleches zum Schutz des Auslegerlagers, insbesondere des oder der eingebrachten Gussteile vor Verschmutzung und Beschädigung vorteilhaft sein. Sinnvoll ist die Anbringung wenigstens eines Abdeckbleches an der Unterseite (Seite des Untergurtes) des Lagers/Gussteils. Ein solches Abdeckblech kann bspw. mit den beiden Lagerblechen sowie dem gebogenen Abschlussblech der Kastenkonstruktion verbunden, insbesondere verschweißt sein. Im Bereich des Auslegerlagers kann wenigstens ein Verstärkungsblech vorgesehen sein. Statt eines Bleches kann aber auch ein Gussteil oder ein bearbeitetes Teil al Verstärkung vorgesehen werden. Beispielsweise können entsprechende Verstärkungsringbleche um die Lageröffnung außen auf den das Gussteil aufnehmenden Lagerblechen aufgebracht sein. Neben der gezielten Verstärkung der Lageröffnung kann durch diese Maßnahme auch die Lagerbreite variiert und angepasst werden, so dass sich die Anordnung der parallelen Lagerbleche flexibler gestaltet. Insbesondere lässt sich der Abstand der Lagerbleche zueinander dadurch kleiner als die erforderliche Lagerbreite des Auslegerlagers wählen.

Gemäß der Erfindung bilden die zwei parallel zueinander angeordneten Lagerbleche wenigstens eine weitere Lagerstelle zur Montage eines Zylinders, insbesondere Hydraulikzylinders. Als Beispiel sei hier die Lagerung für einen Löffelzylinder und/oder Baggerstielzylinder genannt.

Auch hier kann vorgesehen sein, dass im Bereich des wenigstens einen weiteren Lagers wenigstens ein Verstärkungsblech, insbesondere in Form eines Verstärkungsringblechs um die entsprechende Öffnung vorgesehen ist. Auch hier können anstatt eines Bleches, Gussteile oder bearbeitete Teile als Verstärkung vorgesehen sein. Da die erforderliche Lagerbreite für die wenigstens eine weitere Lagerstelle in der Regel kleiner als der Abstand der Lagerbleche zueinander ist, werden entsprechende Verstärkungsbleche nun nicht außen auf die Lagerbleche, sondern innen, d.h. zwischen den beiden Lagerblechen angebracht. Hierdurch kann der Abstand beider Lagerbleche zueinander verkürzt werden.

Neben dem erfindungsgemäßen Baggerstiel betrifft die vorliegende Erfindung zudem einen Bagger mit einem Baggerausleger sowie einem Anbauwerkzeug, wobei das Anbauwerkzeug mittels des erfindungsgemäßen Baggerstiels mit dem Baggerausleger verbunden ist. Demzufolge ergeben sich für den Bagger dieselben Vorteile und Eigenschaften wie sie bereits vorstehend anhand des erfindungsgemäßen Baggerstiels erläutert wurden. Auf eine wiederholende Beschreibung kann demzufolge verzichtet werden.

Weitere Vorteile und Eigenschaften der Erfindung sollen im Folgenden anhand eines in den Figuren dargestellten Ausführungsbeispiels näher erläutert werden. Es zeigen:
- Figur 1:: eine perspektivische Seitenansicht des erfindungsgemäßen Baggerstiels,
- Figur 2:: eine perspektivische Detailansicht der Lagerbleche des Baggerstiels gemäß Figur 1,

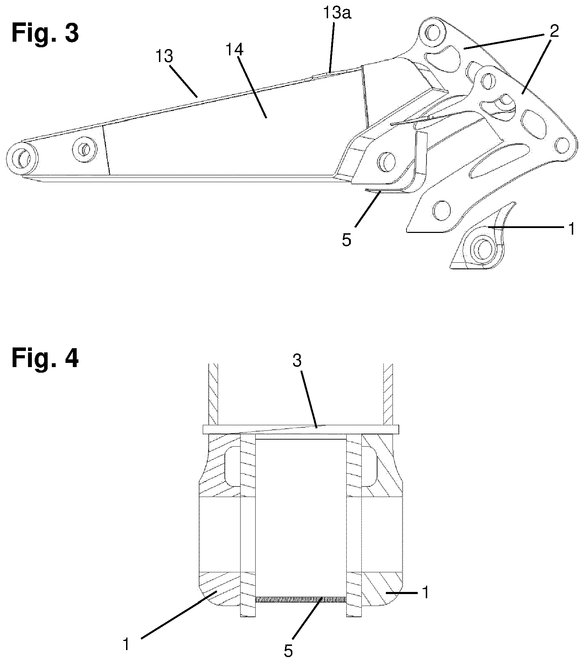

- Figur 3:: eine Seitenansicht des erfindungsgemäßen Baggerstiels mit demontierten Lagerflächen sowie
- Figur 4:: eine Schnittdarstellung durch die Lagerbleche des Baggerstiels im Bereich der Auslegerlagerung.

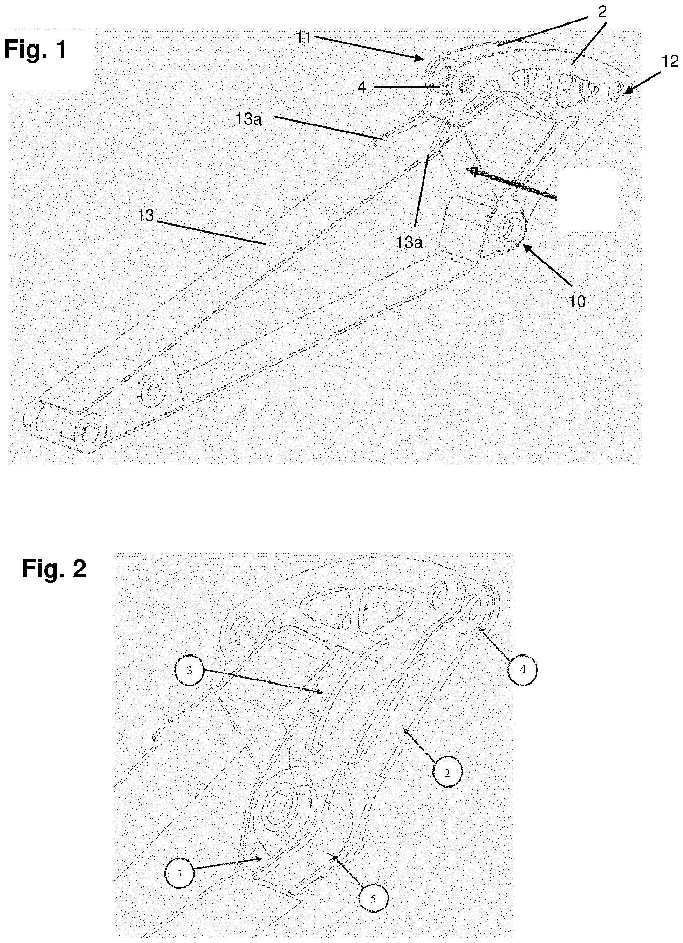

Figur 1 zeigt die perspektivische Ansicht des erfindungsgemäßen Baggerstiels, der aus einer Blechkastenkonstruktion besteht. An einem Ende des Baggerstiels ist das gebogene Abschlussblech 3 vorgesehen, an diesem die beiden parallel zueinander ausgerichteten Lagerbleche 2 angeschweißt sind. Hierbei ist ersichtlich, dass sich die beiden Lagerbleche 2 nicht nur entlang des Abschlussbleches 3 erstrecken, sondern zudem um die Kante auf das den Obergurt bildende Blech 13 verlaufen. Dort zeigen die Lagerbleche 2 einen nach außen, in Richtung der Seitenkante des Baggerstiels gekrümmten Verlauf und enden erst auf seitlichen Verbreiterungen 13a des Obergurtbleches 13, die über die jeweilige Seitenwand 14 des Blechkonstruktes übersteht.

Die Lagerstelle 10 für die Lagerung des Baggerstiels an einem Baggerausleger wird durch wenigstens ein zwischen den Lagerblechen 2 eingesetztes Gussteil gebildet. Bohrungen der Lagerbleche 2 bilden die Öffnung des Auslegerlagers 10. Um die Bohrungen der Lagerbleche 2 sind auf deren Außenseiten jeweils Verstärkungsringbleche 1 aufgebracht. Zum Schutz der Lagerstelle 10 vor Verschmutzung ist zudem das Abdeckblech 5 von unten zwischen den beiden Lagerblechen 2 eingebracht und mit den Lagerblechen 2 als auch dem Abschlussblech 3 verschweißt.

Ein erfindungswesentlicher Punkt der Erfindung besteht darin, dass das eingebrachte Gussteil mittels geschweißter Kehlnaht mit den beiden Lagerblechen 2 verbunden ist. Neben dem Auslegerlager sehen die beiden Lagerbleche 2 weite Lagerstellen vor, so beispielsweise das Lager 12 zur Aufnahme des Baggerstielzylinders. Eine weitere Lagerstelle 11 ist im Bereich des Obergurtes 13 der Lagerbleche 2 vorgesehen. Dieses dient zur Befestigung des Zylinders zur Betätigung des Anbauwerkzeuges, bspw. eines Löffelzylinders. Die Lagerbleche 2 sind zudem mit mehreren Aussparungen zur Gewichtseinsparung versehen.

Ferner besteht ein wesentlicher Punkt der Erfindung darin, dass der Abstand der beiden Lagerbleche 2 zueinander flexibel variiert werden kann und nicht zwingend durch die Breite des Auslegerlagers 10 bzw. der übrigen Lagerstellen 11, 12 vorgegeben wird. Dies wird dadurch ermöglicht, dass bei der Lagerstelle 10 durch die Anbringung der Verstärkungsringbleche 1 die Lagerbreite des Auslegerlagers 10 vergrößert werden kann, insbesondere durch geeignete Wahl der Stärke der Verstärkungsbleche 1. Ähnlich wird bei den übrigen Lagerstellen 11, 12 vorgegangen. Da für die Lagerung der entsprechenden Zylinder eine geringere Lagerbreite benötigt wird, werden bei den Lagerstellen 11, 12 entsprechende Verstärkungsringbleche 4 nicht außen an den Lagerblechen 2 angeordnet, sondern stattdessen auf deren Innenseite. Hierdurch wird der Abstand der Lagerbleche reduziert und die resultierende Lagerbreite verschmälert.

## Patentansprüche

1. Baggerstiel für einen Bagger als Verbindungsglied zwischen Baggerausleger und Werkzeug, wobei der Baggerstiel im Wesentlichen durch eine kastenartige Blechkonstruktion gebildet ist, wobei zwei symmetrische, parallel zueinander ausgerichtete Lagerbleche (2) außen auf ein stirnseitiges Abschlussblech (3) der kastenartigen Blechkonstruktion unter Bildung eines Auslegerlagers (10) als Lagerstelle (10) für die schwenkbare Montage des Baggerstiels an einem Baggerausleger aufgebracht sind, wobei die Lagerstelle nicht unmittelbar in die kastenartige Blechkonstruktion eingearbeitet ist, wobei die Lagerbleche wenigstens eine weitere Lagerstelle (11, 12) zur Montage eines Zylinders, insbesondere zur Lagerung wenigstens eines Löffel- und/oder Baggerstielzylinders, bilden.

2. Baggerstiel nach Anspruch 1, **dadurch gekennzeichnet, dass** die zwei Lagerbleche Lagerverstärkungen aufweisen.

3. Baggerstiel nach Anspruch 2, **dadurch gekennzeichnet, dass** die Lagerverstärkungen als Gussteile oder Bleche ausgeführt sind.

4. Baggerstiel nach einem der vorhergehenden Ansprüche, **dadurch gekennzeichnet, dass** das Auslegerlager über eine Kehlnaht mit den Lagerblechen und/oder dem Abschlussblech verschweisst ist oder mit den Lagerblechen verklebt ist.

5. Baggerstiel nach einem der vorhergehenden Ansprüche, **dadurch gekennzeichnet, dass** die Lagerbleche identisch geformt sind und/oder dass die Lagerbleche auf eine planare Fläche Z eines gebildeten Obergurtes (13) des Baggerstiels reichen und vorzugsweise einen in Richtung der Seitenkante des Baggerstiels gekrümmten Verlauf zeigen und idealerweise erst auf einer seitlichen Verlängerung (13a) des Obergurtes enden.

6. Baggerstiel nach einem der vorhergehenden Ansprüche, **dadurch gekennzeichnet, dass** zwischen den beiden symmetrischen, parallel zueinander ausgerichteten Lagerblechen wenigstens ein Gussteil eingebracht ist, welches die Lagerfunktion übernimmt, wobei das Gussteil mittels einer zwischen den Lagerblechen eingebrachten Abdeckung nach außen abgedeckt ist, wobei die Abdeckung ein Blechteil ist, das mit den Lagerblechen und dem, vorzugsweise gebogenen, Abschlussblech der Kastenkonstruktion verbunden ist.

7. Baggerstiel nach einem der vorhergehenden Ansprüche, **dadurch gekennzeichnet, dass** außen im Bereich des Auslegerlagers wenigstens eine Verstärkung in Form eines Verstärkungsblechs, insbesondere Verstärkungsringblechs (1), Gussteils oder bearbeiteten Teils auf wenigstens eines der Lagerbleche aufgebracht ist.

8. Baggerstiel nach einem der vorhergehenden Ansprüche, **dadurch gekennzeichnet, dass** im Bereich der wenigstens einen weiteren Lagerstelle eine Verstärkung in Form eines Verstärkungsblechs, insbesondere Verstärkungsringblechs (4), Gussteils oder bearbeiteten Teils innen an wenigstens einem der beiden Lagerbleche aufgebracht ist.

9. Baumaschine, insbesondere Bagger, mit einem Baggerausleger und Anbauwerkzeug, das mittels eines Baggerstiels gemäß einem der vorhergehenden Ansprüche mit dem Baggerausleger verbunden ist.

## Claims

1. Excavator shaft for an excavator as a connecting link between an excavator boom and tool, wherein the excavator shaft is substantially formed by a box-like sheet metal construction,
wherein two symmetrical bearing plates (2), oriented in parallel with one another, are applied on the outside, on an end plate (3) of the box-like metal sheet construction, on an end face, forming a boom bearing (10) as a bearing point (10) for the pivotable mounting of the excavator shaft on an excavator boom, wherein the bearing point is not directly formed in the box-like sheet metal construction, wherein the bearing plates form at least one further bearing point (11, 12) for mounting of a cylinder, in particular for mounting of at least one hoe and/or excavator shaft cylinder.

2. Excavator shaft according to claim 1, **characterised in that** the two bearing plates comprise bearing reinforcements.

3. Excavator shaft according to claim 2, **characterised in that** the bearing reinforcements are formed as cast parts or metal sheets.

4. Excavator shaft according to any of the preceding claims, **characterised in that** the boom bearing is welded to the bearing plates and/or to the end plate by a fillet weld, or is adhesively bonded to the bearing plates.

5. Excavator shaft according to any of the preceding claims, **characterised in that** the bearing plates are formed identically, and/or that the bearing plates stretch on a planar surface of a formed top chord (13) of the excavator shaft and preferably have a course that is curved in the direction of the side edge of the excavator shaft and ideally end only on a lateral extension (13a) of the top chord.

6. Excavator shaft according to any of the preceding claims, **characterised in that** at least one cast part is introduced between the two symmetrical bearing plates, oriented in parallel with one another, which cast part assumes the bearing function, wherein the cast part is covered, towards the outside, by means of a covering introduced between the bearing plates, wherein the cover is a sheet metal part which is connected to the bearing plates and the preferably curved end plate of the box construction.

7. Excavator shaft according to any of the preceding claims, **characterised in that**, on the outside, in the region of the boom bearing, at least one reinforcement is applied to at least one of the bearing plates, in the form of a reinforcing plate, in particular reinforcing annular plate (1), cast part or machined part.

8. Excavator shaft according to any of the preceding claims, **characterised in that**, in the region of the at least one further bearing point, a reinforcement is applied, on the inside, to at least one of the two bearing plates, in the form of a reinforcing plate, in particular reinforcing annular plate (4), cast part or machined part.

9. Construction machine, in particular excavator, comprising an excavator boom and attachment tool, which is connected, by means of an excavator shaft according to any of the preceding claims, to the excavator boom.

## Revendications

1. Balancier de pelle, destiné à une pelle, comme organe de liaison entre une flèche de pelle et un outil, le balancier de pelle étant formé essentiellement par une construction en tôle de type caisson,
dans lequel deux tôles de support (2) symétriques orientées parallèlement l'une à l'autre sont appliquées côté extérieur sur une tôle de recouvrement (3) frontale de la construction en tôle de type caisson, formant ainsi un support de flèche (10) sous la forme d'un point d'appui (10) pour le montage pivotant du balancier de pelle sur une flèche de pelle, le point d'appui n'étant pas directement incorporé dans la construction en tôle de type caisson, les tôles de support formant au moins un autre point d'appui (11, 12) pour le montage d'un vérin, en particulier pour le support d'au moins un vérin de balancier de godet et/ou de pelle.

2. Balancier de pelle selon la revendication 1, **caractérisé en ce que** les deux tôles de support présentent des renforts de support.

3. Balancier de pelle selon la revendication 2, **caractérisé en ce que** les renforts de support sont réalisés sous la forme de pièces moulées ou de tôles.

4. Balancier de pelle selon l'une des revendications précédentes, **caractérisé en ce que** le support de flèche est soudé aux tôles de support et/ou à la tôle de recouvrement par le biais d'une soudure d'angle ou est collé aux tôles de support.

5. Balancier de pelle selon l'une des revendications précédentes, **caractérisé en ce que** les tôles de support sont de forme identique et/ou **en ce que** les tôles de support s'étendent jusque sur une surface plane d'une semelle supérieure (13) formée du balancier de pelle et présentent un tracé de préférence curviligne en direction du bord latéral du balancier de pelle et ne se terminent idéalement que sur un prolongement latéral (13a) de la semelle supérieure.

6. Balancier de pelle selon l'une des revendications précédentes, **caractérisé en ce qu'**au moins une pièce moulée est insérée entre les deux tôles de support symétriques orientées parallèlement l'une à l'autre, ladite pièce moulée assurant la fonction de support, la pièce moulée étant couverte par rapport à l'extérieur au moyen d'un couvercle placé entre les tôles de support, le couvercle étant une pièce de tôle qui est reliée aux tôles de support et à la tôle de recouvrement, de préférence courbée, de la construction en caisson.

7. Balancier de pelle selon l'une des revendications précédentes, **caractérisé en ce que**, côté extérieur dans la zone du support de flèche, au moins un renfort sous la forme d'une tôle de renfort, en particulier d'une tôle de bague de renfort (1), d'une pièce moulée ou d'une pièce transformée, est appliqué sur au moins une des tôles de support.

8. Balancier de pelle selon l'une des revendications précédentes, **caractérisé en ce que**, dans la zone de l'au moins un autre point d'appui, un renfort sous la forme d'une tôle de renfort, en particulier d'une tôle de bague de renfort (4), d'une pièce moulée ou d'une pièce transformée, est appliqué côté intérieur sur au moins une des tôles de support.

9. Engin de chantier, en particulier pelle, doté d'une flèche de pelle et d'un outil porté qui est relié à la flèche de pelle au moyen d'un balancier de pelle selon l'une des revendications précédentes.
